Europäisches Patentamt

European Patent Office

Office européen des brevets

(19)

(11) Veröffentlichungsnummer: **0 392 264**
**A2**

(12) # EUROPÄISCHE PATENTANMELDUNG

(21) Anmeldenummer: **90105940.2**

(51) Int. Cl.⁵: **H04L 7/033**

(22) Anmeldetag: **28.03.90**

(30) Priorität: **12.04.89 DE 3912022**

(43) Veröffentlichungstag der Anmeldung:
**17.10.90 Patentblatt 90/42**

(84) Benannte Vertragsstaaten:
**AT BE CH GB IT LI LU NL SE**

(71) Anmelder: **Siemens Aktiengesellschaft**
**Wittelsbacherplatz 2**
**D-8000 München 2(DE)**

(72) Erfinder: **Gieck, Reiner, Dipl.-Ing.**
**Nimrodstrasse 26**
**D-8034 Germering(DE)**
Erfinder: **Schenk, Heinrich, Dipl.-Ing.**
**Fatimastrasse 3**
**D-8000 München 71(DE)**
Erfinder: **Haass, Adolf**
**Eichelhäherweg 54**
**D-8000 München 60(DE)**

(54) **Verfahren zur Gewinnung des Empfangtaktes.**

(57) Es werden nur Bestimmte Signalübergänge " + ,-
" und "-, + " eines ternären Empfangssignals (TE) zur Synchronisierung eines Taktgenerators (TG) verwendet.

## FIG 1

Die Erfindung betrifft ein Verfahren zur Gewinnung des Empfangstaktes nach dem Oberbegriff des Patentanspruches 1.

Bei Datenübertragungssystemen ist es üblich, den Empfangstakt aus den Signalübergängen abzuleiten. Diese dienen zur Synchronisierung eines Taktgenerators, wobei sowohl eine Frequenzregelung als auch eine Phasenregelung üblich ist. Bei ternären Signalen, beispielsweise einem AMI-codierten Signals, entsteht jedoch aufgrund der Signalverzerrungen ein Taktjitter. Dieser ist besonders störend, wenn für 2-Draht-Basisbandübertragung eine Kompensation im Zeitbereich durchgeführt wird, da durch den Jitter ein nicht kompensierbares Restecho entsteht.

Aufgabe der Erfindung ist es, ein Verfahren zur Gewinnung eines weitgehend taktjitterfreien Empfangstaktes anzugeben.

Diese Aufgabe wird durch die im Patentanspruch 1 angegebenen Merkmale gelöst.

Weitere vorteilhafte Ausbildungen der Erfindung sind in den Unteransprüchen angegeben.

Die Verwendung von bestimmten Signalübergängen, beispielsweise von einem positiven auf einen negativen Zustand und umgekehrt hat den Vorteil, daß die Verzerrungen immer gleich groß sind. Diese Übergänge treten bei einem AMI-codierten Signal (alternate mark inversion) bei einer Folge von mindestens zwei logischen Einsen des ursprünglichen binären Signals auf. Theoretisch kann man sich auch auf Signalübergänge beschränken, die nur bei bestimmten mehr als 2 Bits umfassenden Kombinationen auftreten. Die Verzerrungen sind hierbei jedoch nur unwesentlich geringer, aber die Anzahl der auswertbaren Signalübergänge nimmt rasch ab.

Bei einseitigen Verzerrungen des ternären Empfangssignals ist es vorteilhaft, nur Signalübergänge einer bestimmten Richtung zu verwenden.

Das Verfahren wird anhand von Zeitdiagrammen und eines Blockschaltbildes näher erläutert.

Es zeigen

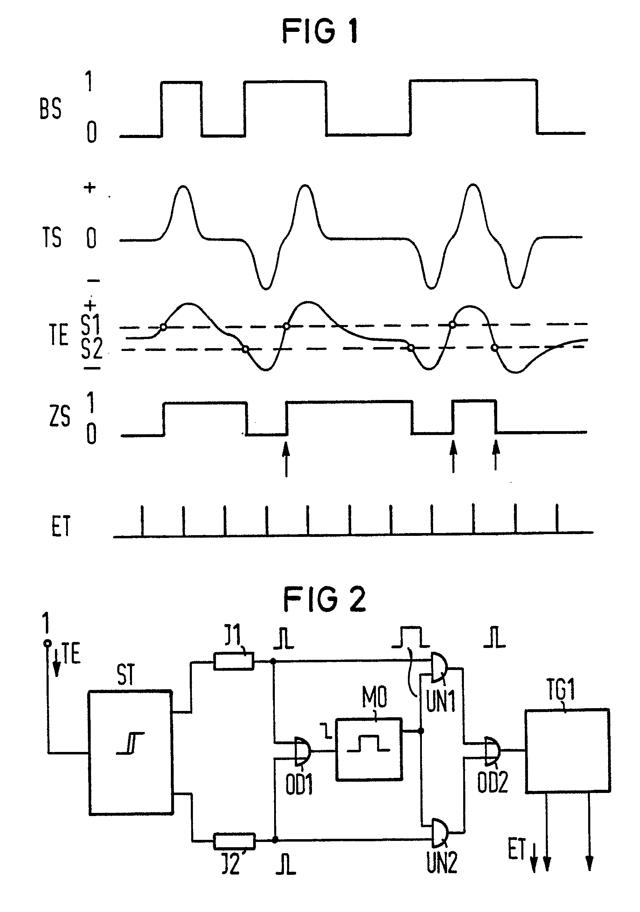

Figur 1 Zeitdiagramme von ternären und zugehörigen binären Signalen und Figur 2 ein Prinzipschaltbild zur Realisierung des Verfahrens.

Das Verfahren wird anhand eines AMI-codierten Signals erläutert. In Figur 1 ist zunächst das ursprüngliche binäre Signal BS dargestellt. Dies wird in ein ternäres Sendesignal TS umgesetzt, wobei den logischen Einsen abwechselnd die Zustände "+" und "-" umgesetzt werden und jeder binären Null der Signalwert "0" zugeordnet wird. Bei der Übertragung des ternären Sendesignals über größere Entfernungen kommt es zu Verzerrungen, so daß empfangsseitig ein Signal zu erwarten ist, das dem in Figur 1 dargestellten ternären Empfangssignal TE gleicht. Mittels zweier Schwellen S1 und S2 wird dieses Signal abgetastet und in ein binäres Zwischensignal ZS umgesetzt. Die Übergänge zwischen einem ternären Wert "0" und einem ternären Wert "+" oder "-" sind hierbei mit größeren Verzerrungen behaftet. Die Übergänge bei aufeinanderfolgenden ternären Signalwerten "+" und "-" und umgekehrt sind dagegen praktisch verzerrungsfrei, daher werden nur die mit Pfeilen gekennzeichneten Übergänge des Zwischensignals ZS zur Synchronisierung eines Taktgenerators verwendet.

In Figur 2 ist das Prinzipschaltbild zur Realisierung des Verfahrens dargestellt. Es enthält einen Schmittrigger ST, an dessen Ausgänge zwei Impulsstufen I1 und I2 angeschlossen sind, deren Ausgangsimpulse über ein erstes ODER-Gatter OD1 eine monostabile Kippstufe M0 triggern und außerdem jeweils auf einen Eingang eines ersten UND-Gatters UN1 bzw. eines zweiten UND-Gatters UN2 geführt sind. Der Ausgang der monostabilen Kippstufe ist mit den zweiten Eingängen der UND-Gatter UN1 und UN2 verbunden, deren Ausgänge über ein zweites ODER-Gatter OD2 auf einen Eingang des Taktgenerator TG geführt sind.

Das ternäre Empfangssignal TE wird über einen Eingang 1 dem Schmitt-Trigger ST zugeführt, der an seinen Ausgängen das Zwischensignal ZS abgibt. Durch die erste Impulsstufe I1 wird bei einem positiven Übergang ein Impuls abgegeben, durch die zweite Impulsstufe I2 wird dagegen bei einem negativen Signalübergang ein Impuls erzeugt. Beide Impulse werden über das erste ODER-Gatter OD1 zusammengefaßt und triggern die monostabile Kippstufe M0, die an ihren Ausgang einem Impuls von ca. der 1,5-fachen Dauer eines Bits abgibt, so daß durch die UND-Gatter UN1 und UN2 lediglich der erste von einem Signalübergang erzeugte Impuls von mehreren aufeinanderfolgenden Impulsen des ternären Empfangssignals unterdrückt wird. Aufeinanderfolgende Zustände "+,-" oder "-,+" des empfangenen Ternärsignals erzeugen stets mindestens zwei Übergänge zwischen den Signalzuständen und führen daher stets zur Synchronisierung des Taktgenerators TG, der unter anderem den Empfangstakt ET abgibt.

Natürlich sind zur Realisierung des Verfahrens zahlreiche Schaltungsvarianten denkbar. Auf die monostabile Kippstufe kann im allgemeinen verzichtet werden, da anstelle ihres Ausgangssignals das wiedergewonnene Binärsignal verwendet werden kann. Ebenso können zu Beginn eines Synchronisierungsvorgangs - beispielsweise beim Beginn der Datenübertragung oder beim Einschalten des Empfangsgerätes - während einer beschränkten Zeitdauer sämtliche Flanken zur Synchronisierung verwendet werden. Natürlich ist auch eine Restart-Synchronisierung bei Betriebsaufnahme möglich.

**Ansprüche**

1. Verfahren zur Gewinnung des Empfangstaktes (ET) durch Auswertung von Übergängen zwischen Signalzuständen (+, 0, -) eines ternären Empfangssignals (TE) und Synchronisierung eines Taktgenerators (TG),
**dadurch gekennzeichnet,**
daß nur die Signalübergänge zur Synchronisierung verwendet werden, die zwischen einem positiven Signalzustand (+) und einem unmittelbar folgenden negativen Signalzustand (-) und umgekehrt auftreten.

2. Verfahren nach Anspruch 1,
**dadurch gekennzeichnet,**
daß nur Nulldurchgänge verwendet werden, die bei einem der Signalübergänge (+, -) des ternären Empfangssignals (TE) auftreten.

3. Verfahren nach Anspruch 2,
**dadurch gekennzeichnet,**
daß zu Beginn eines neuen Synchronisierungsvorganges zunächst sämtliche Signalübergänge in einen positiven Signalzustand (+) oder einem negativen Signalzustand (-) zur Synchronisierung verwendet werden.

## FIG 1

## FIG 2